# EUROPEAN PATENT SPECIFICATION

(11) **EP 4 427 108 B1**
(45) Date of publication and mention of the grant of the patent: **24.12.2025**
(21) Application number: 22830633.8
(22) Date of filing: 01.11.2022
(51) Int. Cl.: G05D 1/00, E02F 9/20, E02F 9/26

(54) **SYSTEM AND METHOD FOR CONTROLLING TRAVEL OF WORK MACHINE**
SYSTEM UND VERFAHREN ZUR STEUERUNG DES FAHRWEGS EINER ARBEITSMASCHINE
SYSTÈME ET PROCÉDÉ PERMETTANT DE COMMANDER LE DÉPLACEMENT D'UNE MACHINE DE TRAVAIL

(30) Priority: 03.11.2021 US 202117453391
(43) Date of publication of application: 11.09.2024
(73) Proprietor: Caterpillar Inc., Peoria, IL 61629-9510 (US)
(72) Inventor: HODEL, Benjamin, Dunlap, Illinois 61525 (US); MCGEE, Robert Jason, Clayton, North Carolina 27527 (US)
(74) Representative: Novagraaf Group
(86) International application number: PCT/US2022/048501
(87) International publication number: WO 2023/081111

(56) References cited:
- WO-A1-2020/023684
- US-A1- 2020 326 713
- US-A1- 2021 149 391

## Description

### Technical Field

The present disclosure relates to a system and a method for controlling a travel of a work machine during an excavation operation.

### Background

Work machines, such as excavators, may be used for various material removal operations. For example, the work machine may be used to perform an excavation operation, such as, a foundation excavation operation or a trench excavation operation. Further, during the excavation operation, the work machine may tram or travel from one excavation location to another excavation location. It may be desirable that, during a tramming of the work machine, the work machine causes minimum disturbance to a ground surface on which the work machine is operating. In some cases, the work machine may inadvertently displace some amount of soil from the ground surface, which may affect an efficiency of the excavation operation. Thus, it may be desirable to move the work machine along an optimal movement path that causes minimum ground surface disturbance.

Further, during the tramming of the work machine, the work machine may unintentionally deviate from the movement path due to one or more factors, such as track slip, drivetrain dynamics, datum uncertainty, measurement errors, operator errors, and the like. Due to a misalignment of the work machine relative to the movement path, soil may fall into an excavated portion from a non-excavated portion and/or soil may erode into the excavated portion. Further, it may be challenging to align work machines, including the tracks for movement purposes, with the movement path. For example, it may be challenging to reposition tracked work machines sideways or turn them at sharp bends. Thus, when such work machines misalign from the movement path, an operator may have to spend additional time and fuel aligning the work machine with the movement path. The misalignment of the work machine from the movement path may affect the efficiency of the excavation operation and may increase operation cost. Moreover, during trench excavation operations, the misalignment of the work machine from the movement path may result in excavation of a crooked trench, which may not be desirable.

U.S. Patent Number 8,583,326 describes a GNSS-based contour guidance path selection system for guiding a piece of equipment through an operation, such as navigating a guide path, includes a processor programmed for locking onto a particular aspect of the operation, such as deviating from a pre-planned or original guidance pattern and locking the guidance system onto a new route guide path, while ignoring other guidance paths. The system gives a vehicle operator control over a guidance route without the need to re-plan a pre-planned route. The device corrects conflicting signal issues arising when new swaths result in the guidance system receiving conflicting directions of guidance where the new swaths cross predefined swaths. An operator can either manually, or with an autosteer subsystem automatically, maintain a new contour guidance pattern, even while crossing predefined guidance paths that would otherwise divert the vehicle.

US 2021/149391 A1 discloses hauling earth using a cooperative fleet of vehicles. US 2021/149391 A1 provides an autonomous or semi-autonomous earth shaping vehicle that is capable of cooperatively hauling earth from a first location to a second location in a dig site with other earth shaping vehicles. A first earth shaping vehicle navigates through a set of coordinates within the coordinate space that represent a path from the start location to the end location. As the first earth shaping vehicle navigates towards the end location, the set of coordinates are dynamically updated to avoid collisions with neighboring earth shaping vehicles in the dig site. The updates to the set of coordinates are determines based on a position of the first earth shaping vehicle relative to a position of the second earth shaping vehicle. The velocity of the first earth shaping vehicle may be adjusted to maintain a threshold distance between the first earth shaping vehicle and each neighboring earth shaping vehicle.

WO 2020/023684 A1 discloses excavating earth from a dig site using an excavation vehicle. WO 2020/023684 A1 provides an autonomous or semi-autonomous excavation vehicle that is capable of navigating through a dig site and carrying an excavation routine using a system of sensors physically mounted to the excavation vehicle. The sensors collect one or more of spatial, imaging, measurement, and location data representing the status of the excavation vehicle and its surrounding environment. Based on the collected data, the excavation vehicle executes instructions to perform an excavation routine by excavating earth from a hole using an excavation tool positioned at a single location within the site. The excavation vehicle is also able to carry out numerous other tasks, such as checking the volume of excavated earth in an excavation tool, navigating the excavation vehicle over a distance while continuously excavating earth from a below surface depth, and preparing a digital terrain model of the site as part of a process for creating the excavation routine.

US 2020/326713 A1 discloses a method that includes receiving a worksite plan to be executed by a machine at a worksite, and determining first travel parameters of the machine. Such first travel parameters include a first travel path along a work surface, and first work tool positions. The method also includes controlling the machine to traverse at least part of the first travel path, receiving sensor information associated with the work surface, and identifying an imperfection of the work surface located along the first travel path. The method further includes determining second travel parameters of the machine. Such second travel parameters include a second travel path along the work surface, and second work tool positions. The method also includes controlling the machine to traverse at least part of the second travel path while positioning the work tool according to at least one of the second work tool positions.

### Summary of the Disclosure

In one aspect of the present disclosure, a system according to claim 7 is provided.

In another aspect of the present disclosure, a method according to claim 1 is provided.

Other features and aspects of this disclosure will be apparent from the following description and the accompanying drawings.

### Brief Description of the Drawings

FIG. 1 illustrates a side view of a work machine, according to examples of the present disclosure;
FIG. 2 illustrates a block diagram of a system for controlling a travel of the work machine of FIG. 1, according to examples of the present disclosure;
FIG. 3 illustrates the work machine of FIG. 1 moving along a first desired movement path, according to examples of the present disclosure;
FIG. 4 illustrates the work machine of FIG. 1 moving along a second desired movement path, according to examples of the present disclosure;
FIG. 5 illustrates the work machine of FIG. 1 moving along a third desired movement path, according to examples of the present disclosure; and
FIG. 6 illustrates a flowchart of a method for controlling the travel of the work machine during an excavation operation, according to examples of the present disclosure.

### Detailed Description

Wherever possible, the same reference numbers will be used throughout the drawings to refer to the same or the like parts. Wherever possible, corresponding or similar reference numbers will be used throughout the drawings to refer to the same or corresponding parts.

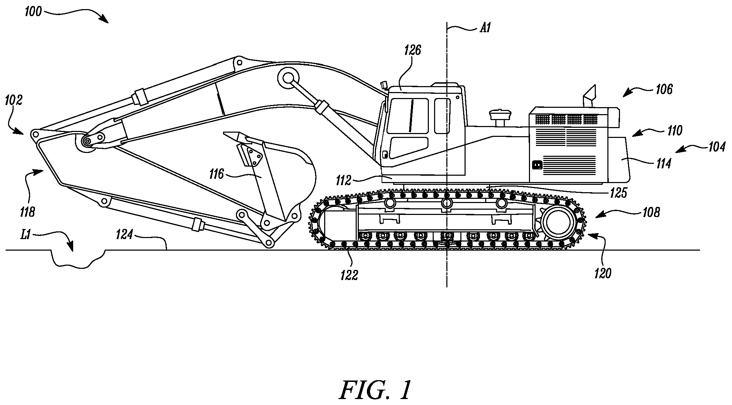

FIG. 1 illustrates an exemplary work machine 100. The work machine 100 is embodied as a hydraulic excavator herein. Although shown as the hydraulic excavator, it may be understood that the work machine 100 may alternatively include other work machines such as motor graders, mining shovels, dozers, tractors, or compactors, without any limitations. The work machine 100 may include a manual machine, an autonomous machine, or a semi-autonomous machine. The work machine 100 may perform one or more excavation operations at a construction site. In some examples, the work machine 100 may be used for trench excavation operations or foundation excavation operations.

The work machine 100 defines a front end 102 and a rear end 104. The work machine 100 also includes a movable carrier 106. The movable carrier 106 includes a lower structure 108 and an upper structure 110 movably coupled with the lower structure 108. The upper structure includes a frame 112. The upper structure 110 may support various components of the work machine 100 thereon. The upper structure 110 defines an enclosure 114. The enclosure 114 allows mounting of a power source (not shown). The power source may provide operating power to the work machine 100 for mobility and operational requirements. The power source may include, but is not limited to, a diesel engine, a gasoline engine, a gaseous fuel powered engine, a dual fuel powered engine, an electric motor, a fuel cell, a battery, and/or a combination thereof, based on application requirements. Additionally, the work machine 100 may include components (not shown) and/or systems (not shown), such as a fuel delivery system, an air delivery system, an exhaust system, a drivetrain, a hydraulic system, a transmission system, and so on, based on application requirements.

The work machine 100 may also include a work implement 116 disposed proximate the front end 102. The work implement 116 may be operably connected to the upper structure 110 by a linkage assembly 118. The work implement 116 may be used for various material handling operations, material removal operations, and/or material transportation operations. For example, during an excavation operation, the work implement 116 may contact a ground surface 124 for removing material therefrom. The lower structure 108 includes an undercarriage structure 120. The undercarriage structure 120 provides support and mobility to the work machine 100 on a ground surface 124. The undercarriage structure 120 includes a set of ground engaging members 122 (only one ground engaging member 122 is shown in the accompanying figure). In the illustrated example of FIG. 1, the ground engaging members 122 are embodied as tracks. In other examples, the ground engaging members 122 may embody wheels or drums. As such, the ground engaging members 122 enable travel/tramming of the work machine 100 on the ground surface 124.

The work machine 100 includes the hydraulic system (not shown). The hydraulic system may include one or more hydraulic circuits and one or more hydraulic actuators. For example, the work implement 116 and the linkage assembly 118 of the work machine 100 may be hydraulically coupled to the hydraulic system. In some examples, the one or more hydraulic actuators may be actuated to move the work implement 116 and the linkage assembly 118 for excavation of materials from the ground surface 124.

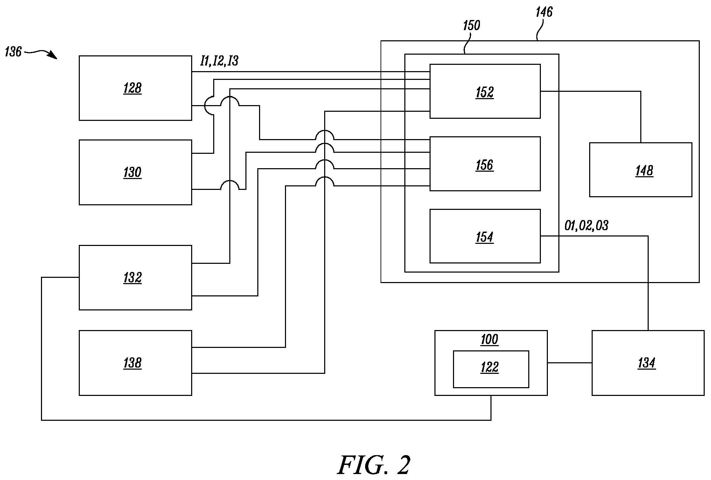

The work machine 100 includes a turn table 125. The turn table 125 is mounted on the undercarriage structure 120, upon which the upper structure 114, including an operator cabin 126, may be pivotally mounted. The turn table 125 defines a first axis "A1". The work machine 100 also includes the operator cabin 126 supported by the frame 112. The operator cabin 126 may move relative to the undercarriage structure 120, about the first axis "A1". Such a movement of the operator cabin 126 may be referred to as a yaw movement of the operator cabin 126. Further, the operator cabin 126 may include one or more input devices 128 (shown in FIG. 2). The input devices 128 may include a lever, a button, a joystick, and the like. Moreover, the operator cabin 126 may include one or more output devices 130 (shown in FIG. 2). In an example, the output device 130 may include a display screen. In some examples, the output device 130 may embody a touch screen device that may include means to provide outputs to a machine operator and may also include means to receive inputs, that may be physical inputs or virtual inputs, from the machine operator. In some examples, the input and output devices 128, 130 may be present at a base station (not shown) which may be located remotely with respect to the work machine 100.

Further, the work machine 100 may include a sensor 132 (shown in FIG. 2). The sensor 132 may be hereinafter interchangeably referred to as a first sensor 132. The first sensor 132 may include a yaw sensor. The first sensor 132 may include a gyroscopic device that may generate a signal indicative of a yaw angle of the operator cabin 126. The first sensor 132 may include any type of sensor, such as, a piezoelectric sensor, a micromechanical sensor, and the like. The first sensor 132 may be mounted on the operator cabin 126. It should be noted that a type of the first sensor 132 mentioned herein does not limit the scope of the present disclosure and the work machine 100 may include any other type of sensors that may provide the desired features.

The work machine 100 also includes a machine controller 134 (as shown in FIG. 2). The machine controller 134 may embody a machine control unit (MCU). The machine controller 134 may control one or more systems of the work machine 100, such as, the fuel delivery system, the exhaust system, the transmission system, the hydraulic system, and the like. It should be noted that the machine controller 134 may also control the ground engaging members 122 to move the work machine 100 at desirable velocities, based on inputs received from the machine operator or other control systems.

Further, the work machine 100 may include an imaging device (not shown). The imaging device may be used to sense a surrounding of the work machine 100. In some examples, the imaging device may be used for object or personnel detection around the work machine 100 as well as terrain mapping, without any limitations. In some examples, the imaging device may capture images or videos of a surrounding area of the work machine 100. The imaging device may include a camera. It should be noted that the imaging device may include any type of imaging device known in the art, without limiting the scope of the present disclosure.

FIG. 2 illustrates a system 136 for controlling the travel of the work machine 100 during the excavation operation. It should be noted that the system 136 described herein may be associated with semi-autonomous, manual, or autonomous work machines, without any limitations. Further, the system 136 may facilitate a semi-autonomous travel feature of the work machine 100. The system 136 includes one or more sensors 138 to generate data indicative of one or more position parameters of the work machine 100. The sensor 138 may be hereinafter interchangeably referred to as a second sensor 138. Further, the position parameter includes one or more of an orientation of the work machine 100 and a location of the work machine 100. The orientation of the work machine 100 may be indicative of a data related to a heading direction of the work machine 100. Further, the second sensor 138 may also generate data related to the location of the work machine 100 at a worksite. In some examples, the position parameter may also include a position of the operator cabin 126 (see FIG. 1) relative to the undercarriage structure 120 (see FIG. 1) of the work machine 100. More particularly, the first sensor 132 may provide the position of the operator cabin 126 relative to the undercarriage structure 120 of the work machine 100.

The second sensor 138 may include an inertial measurement unit (IMU), a global positioning system (GPS) module, and the like. In an example, the system 136 may include the IMU as well the GPS module. Alternatively, the system 136 may include the GPS module alone. The IMU may include an electronic device that measures and provides parameters, such as, a velocity of the work machine 100, the orientation of the work machine 100, and the like, using a combination of accelerometers, gyroscopes, and magnetometers. The IMU may be located at the upper structure 110 of the work machine 100. Further, the GPS module may include a known satellite-based radionavigation system. The GPS module may provide parameters, such as, the location of the work machine 100 and/or the orientation of the work machine 100. In some examples, the system 136 may include a pair of GPS modules. For example, such a pair of GPS modules may provide information related to a current heading direction of the work machine 100. In some examples, the operating parameter may be determined based on a combination of the inputs received from the first and second sensors 132, 138.

It should be noted that a type of the second sensor 138 mentioned herein does not limit the scope of the present disclosure. Accordingly, the system 136 may include any other type of sensors or techniques known in the art that may provide data indicative of the orientation of the work machine 100 and the location of the work machine 100.

The system 136 may further include an indication system (not shown). The indication system may include a horn, a speaker, a strobe, and the like. In some examples, the indication system may be activated by the machine operator using one or more levers, switches, buttons, and the like, present in the operator cabin 126 (see FIG. 1). In an example, the indication system may be activated before initiating the excavation operation or the travel of the work machine 100 for alerting personnel present around the work machine 100.

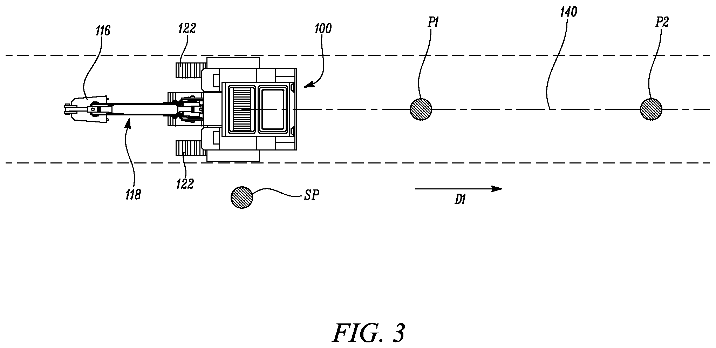

In some examples, the indication system may provide warnings and/or indications if the work machine 100 is not in alignment with a desired movement path 140, 142, 144 (see FIGS. 3, 4, and 5). In other examples, when the work machine 100 is in alignment with the desired movement path 140, 142, 144, but the operator cabin 126 is not oriented as desired or the operator cabin 126 is oriented out of phase (e.g., facing backward instead of forward relative to a direction of vehicle travel) by about 180 degrees, the indication system may notify the machine operator to adjust the operator cabin 126 before initiating the travel of the work machine 100. For example, the indication system may generate an alert for notifying the machine operator that the operator cabin 126 may be reversed in a direction that is opposite to an expected direction of travel of the ground engaging members 122. In some examples, as per operator preferences, the system 136 may be designed to proceed with the semi-autonomous travel feature of the work machine 100 after generating the alert. In another example, based on operator preferences, the system 136 may be designed to generate the alert as well as terminate the semi-autonomous travel feature of the work machine 100 if the operator cabin 126 is reversed in the direction that is opposite to the expected direction of travel of the ground engaging members 122. In yet another example, based on operator preferences, the indication system may not generate the alert and proceed with the semi-autonomous travel feature of the work machine 100 if the operator cabin 126 is reversed in the direction that is opposite to the expected direction of travel of the ground engaging members 122. In some examples, when the yaw angle of the operator cabin 126 may be greater than a predetermined threshold angle, such as, 90 degrees, the indication system may generate the alert or the system 136 may terminate the semi-autonomous travel feature of the work machine 100. Alignment can mean all or part of the work machine 100 is located within a predetermined distance of or angle relative to a reference point (or route), for example, 1 meter, or 5 degrees.

The system 136 further includes a controller 146 communicably coupled with the second sensor 138. Further, the controller 146 is communicably coupled with the input device 128, the output device 130, the first sensor 132, the machine controller 134, the imaging device, and the indication system. In the illustrated example of FIG. 2, the controller 146 and the machine controller 134 are explained as different devices. Alternatively, a single controller may perform functions of the controller 146 and the machine controller 134, without any limitations.

The controller 146 may include a memory 148. The memory 148 may include a flash memory, a random-access memory (RAM), an electrically erasable programmable read-only memory (EEPROM), and the like. The memory 148 may be used to store data such as algorithms, instructions, arithmetic operations, and the like. The controller 146 may execute various types of digitally-stored instructions, such as a software program or an algorithm program, retrieved from the memory 148, or a firmware program which may enable the controller 146 to perform a wide variety of operations. In some examples, the memory 148 may store data indicative of the desired movement path 140, 142, 144 for the work machine 100.

The controller 146 receives an input "I1" from the machine operator for initiating the travel of the work machine 100, such that the one or more components 116 of the work machine 100 are in alignment with the desired movement path 140, 142, 144 (see FIGS. 3, 4, and 5). In the illustrated example, the one or more components 116 of the work machine 100 may include the work implement 116. The work implement 116 may be hereinafter interchangeably referred to as the component 116. In an example, the machine operator may select a section of the work implement 116 that needs to be aligned with the desired movement path 140, 142, 144. The section of the work implement 116 may include a central portion of the work implement 116, a left edge of the work implement 116, a right edge of the work implement 116, and the like. In other examples, the ground engaging members 122, the linkage assembly 118 (see FIG. 1), and the like may be aligned with the desired movement path 140, 142, 144, without any limitations.

Further, the machine operator may provide the input "I1" to the controller 146 via the input device 128 to initiate the travel of the work machine 100 towards a desired location "L1" (shown in FIG. 1). In an example, the input device 128 for initiating the travel of the work machine 100 may include a trigger or a pushbutton. In another example, the travel of the work machine 100 along the desired movement path 140, 142, 144 may be initiated based on an operation of a pedal by the machine operator. The input "I1" may be generated based on a single pressing of the input device 128 or a double-pressing of the input device 128. In some examples, more than one input device 128 may be operated in series or parallel to generate the input "I1" to eliminate a possibility of inadvertent generation of the input "I1". Based on the receipt of the input "I1", the controller 146 may activate the semi-autonomous travel feature of the work machine 100. In one example, if the controller 146 determines the presence of objects or personnel surrounding the work machine 100 or in the desired movement path 140, 142, 144, the controller 146 may deactivate the semi-autonomous travel feature to terminate the travel of the work machine 100. Further, the controller 146 may generate a notification to alert the operator regarding the presence of the object or personnel around the work machine 100. The notification may be provided via the output device 130 or the indication system. In some examples, the controller 146 may transmit signals to the indication system to alert the machine operator that the work machine 100 is initiating the travel towards the desired location "L1".

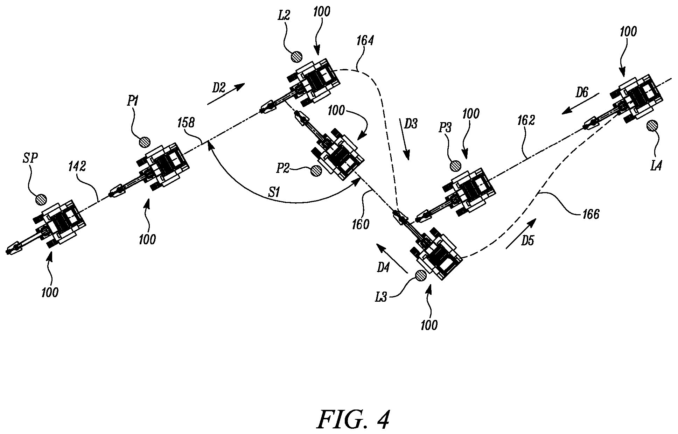

The desired movement path 140, 142, 144 may be hereinafter interchangeably referred to as a first desired movement path 140, a second desired movement path 142, and a third desired movement path 144, respectively. Further, the term "desired movement path" as defined herein may represent a desired trench path, in other words, a path that is to be excavated by the work machine 100. The desired movement path 140, 142, 144 may include one or more of a straight path, a curved path, a number of straight paths (such as the straight paths 158, 160, 162 illustrated in FIG. 4), and a combination thereof. The desired movement path 140, 142, 144 may be determined based on one or more of a geometry of a trench, a ditch, or a foundation, a shape of the trench, the ditch, or the foundation, a center of the trench, the ditch, or the foundation, an edge of the trench, the ditch, or the foundation, and the like. Further, the geometry of the trench, the ditch, or the foundation may include parameters, such as, a depth, a height, a length, and the like. The desired movement path 140, 142, 144 may generally include a line or a path that the work machine 100 may follow while moving from one location to another. Moreover, the desired movement path 140, 142, 144 may be prestored in the memory 148 associated with the controller 146, provided as a path input "I2" by the machine operator, or determined by the controller 146.

The controller 146 may also include a processor 150. The processor 150 may be communicably coupled with the memory 148. The processor 150 may receive and process one or more input signals received from the input device 128, the output device 130, the first sensor 132, the second sensor 138, and the machine controller 134. The processor 150 may include a processing unit such as a digital signal processor (DSP), an application-specific system processor (ASSP), an application-specific instruction set processor (ASIP), and the like. The processor 150 may also include a microprocessor, and/or any processing logic such as a field-programmable gate array (FPGA), an application-specific integrated circuit (ASIC), and the like. The processor 150 may include an arithmetic logic unit (ALU) to execute one or more arithmetic and logical functions.

The processor 150 may include one or more modules, such as a path planning module 152, a drive module 154, and a path tracker module 156 that may be based on data retrieved from the memory 148. For example, the processor 150 may include the path planning module 152 to plan the travel of the work machine 100 such that the work machine 100 is in alignment with the desired movement path 140, 142, 144. The controller 146 receives the data indicative of the position parameter of the work machine 100 from the sensor 138. The controller 146 also collects data indicative of the desired movement path 140, 142, 144 for the work machine 100 to reach the desired location "L1". More particularly, in an example, the path planning module 152 may collect data indicative of the desired movement path 140, 142, 144. In some examples, the path planning module 152 may receive the path input "I2" indicative of the desired movement path 140, 142, 144 from the machine operator via the input device 128.

In an example, the path planning module 152 may determine and display the multiple desired movement paths 140, 142, 144 on the output device 130. In such examples, the machine operator may select any one of the desired movement paths 140, 142, 144. Alternatively, the machine operator may generate the desired movement path 140, 142, 144 in real time using touch screen devices present in the operator cabin 126. For example, the ground surface 124 may be depicted on the touch screen device and the operator may draw the desired movement path 140, 142, 144 on the touch screen device. Moreover, in some examples, the machine operator may use the imaging device to generate the desired movement path 140, 142, 144. For example, personnel may generate a design line on the ground surface 124 and the imaging device may be used to capture an image of the design line. Further, the path planning module 152 may analyze the images of the design line captured by the imaging device to generate the desired movement path 140, 142, 144.

In another example, the path planning module 152 may retrieve the desired movement path 140, 142, 144 from the memory 148, based on application requirements. In yet another example, the path planning module 152 may itself determine the desired movement path 140, 142, 144 for the work machine 100. In an example, the desired movement path 140, 142, 144 may be specified off-board, such as, via a desktop application, and the desired movement path 140, 142, 144 may be subsequently loaded onto the memory 148. For example, the memory 148 may store a work plan for the excavation operation and based on the work plan, the path planning module 152 may determine the desired movement path 140, 142, 144.

Further, the controller 146 determines one or more operating parameters of the work machine 100 to reach the desired location "L1" based on the data indicative of the position parameter of the work machine 100 and the data indicative of the desired movement path 140, 142, 144. Specifically, the path planning module 152 may determine the operating parameters to reach the desired location "L1" based on the data indicative of the position parameter of the work machine 100 and the data indicative of the desired movement path 140, 142, 144.

The operating parameter includes one or more of the desired travel distance of the work machine 100, a maximum velocity of the work machine 100, and a desired travel direction of the work machine 100. The term "desired travel distance" may correspond to a distance between the current location of the work machine 100 and the desired location "L1". The desired travel distance may be determined based on a size of the work machine 100, the geometry of the trench, ditch, or the foundation, such as a depth, the location of the work machine 100, and the desired location "L1". The size of the work machine 100, the geometry of the trench, ditch, or the foundation, and the desired location "L1" of the work machine 100 may be prestored in the memory 148 and may be retrieved therefrom by the path planning module 152. In some examples, the desired location "L1" may be dynamic in nature and may be provided as an input by the machine operator. Further, the location of the work machine 100 may be received from the second sensor 138.

Moreover, in some examples, a value of the desired travel distance may be prestored in the memory 148 associated with the controller 146. Accordingly, the path planning module 152 may retrieve the value of the desired travel distance from the memory 148. Further, in some examples, the controller 146 receives an input "I3" from the machine operator for one or more of increasing the desired travel distance and decreasing the desired travel distance. It should be noted that the machine operator may increase or decrease the desired travel distance to vary a positioning of the work machine 100 relative to the desired location "L1". For example, some machine operators may prefer that the work machine 100 is positioned closer to the desired location "L1" for performing the excavation operation, whereas some machine operators may prefer that the work machine 100 is positioned farther from the desired location "L1" for performing the excavation operation. The machine operator may provide the input "I3" via the input device 128.

In other examples, based on operator preferences, the work machine 100 may halt based on an input received from the machine operator. For example, the work machine 100 may keep moving even after the desired travel distance has elapsed and/or the work machine 100 has moved past the desired location "L1", until the machine operator provides the input for halting the work machine 100. Therefore, in such examples, the work machine 100 may travel more than the desired travel distance. Further, the work machine 100 may halt when the machine operator may release a pedal or move a joystick disposed in the operator cabin 126. In some examples, the work machine 100 may also halt before the work machine 100 has travelled the desired travel distance and/or before the desired location "L1" based on the input received from the machine operator.

In some examples, the controller 146 may also generate a prompt screen that may be displayed on the output device 130. The prompt screen may include different values for the desired travel distance, such that the machine operator may select a desired value for the desired travel distance based on their preference. In such examples, the path planning module 152 may proceed with desired travel distance as selected by the machine operator.

Moreover, the term "maximum velocity" as used herein may relate to a velocity at which the work machine 100 may move to reach the desired location "L1". In some examples, the path planning module 152 may generate commands to ramp up to a velocity not exceeding the maximum velocity and may also ramp back down so that it achieves zero velocity near the desired location "L1". Further, the maximum velocity of the work machine 100 may be determined by the path planning module 152 based on the location of the work machine 100, the desired location "L1", the desired travel distance, one or more characteristics of the ground surface 124, climatic conditions around the work machine 100, and the like. The one or more characteristics of the ground surface 124 may include, for example, an inclination at the worksite, a condition of the soil, and the like.

In some examples, a value of the maximum velocity may be controllable by the machine operator. In such examples, the path planning module 152 may proceed with the input for the maximum velocity received from the machine operator. The machine operator may provide an input indicative of the maximum velocity to the controller 146, via the one or more input devices 128 present in the operator cabin 126.

In an example, the maximum velocity may be dynamically controlled by the machine operator. In some examples, the input indicative of the maximum velocity may be provided by the machine operator using dual control input devices or single control input devices. The dual control input devices may include dual pedal-controls or dual joystick-controls, without any limitations. Further, the single control input devices may include a single pedal-control or a single joystick-control, without any limitations. Furthermore, when using dual control input devices, inputs being received from each of the dual control input devices may be reduced to a single input to indicate the maximum velocity. The single input may be a minimum value of the inputs being received from each of the dual control input devices, a maximum value of the inputs being received from each of the dual control input devices, or an average of the inputs being received from each of the dual control input devices.

In some examples, the controller 146 may also generate a prompt screen that may be displayed on the output device 130. The prompt screen may include different values for the maximum velocity, such that the machine operator may select a desired value for the maximum velocity based on their preference. In such examples, the path planning module 152 may proceed with the desired value for the maximum velocity selected by the machine operator.

In some examples, when the semi-autonomous travel feature is activated and the work machine 100 is moving towards the desired location "L1", the machine operator may be able to accelerate or decelerate the work machine 100 to increase or decrease the maximum velocity of the work machine 100. Thus, when the semi-autonomous travel feature is activated, the machine operator may be able to increase and/or decrease the maximum velocity and increase and/or decrease the travel distance. In an example, the machine operator may be able to halt the work machine 100 before travelling the desired travel distance and/or before reaching the desired location "L1". In another example, the machine operator may halt the work machine 100 after the work machine 100 has travelled the desired travel distance and/or after the work machine 100 has moved past the desired location "L1". However, when the semi-autonomous travel feature is activated, the machine operator may not be able to steer the work machine 100. If desired, the machine operator may activate the brakes to halt the travel of the work machine 100 or disable the semi-autonomous travel feature based on usage of a particular input device 128 dedicated for disabling the semi-autonomous travel feature.

Further, the path planning module 152 may also determine the desired travel direction of the work machine 100. In an example, the desired travel direction may be determined based on the desired location "L1" and the current travel direction of the work machine 100 received from the sensor 138, such that the movement of the work machine 100 in the desired travel direction may allow the work machine 100 to reach the desired location "L1". Moreover, the path planning module 152 may also determine a position of the operator cabin 126 relative to the undercarriage structure 120. In an example, if the yaw angle of the operator cabin 126 does not lie within the predetermined threshold angle, the path planning module 152 may generate a notification for the operator to adjust the position of the operator cabin 126 before initiating the travel of the work machine 100.

Further, the controller 146 generates a first control signal "O1" for controlling the travel of the work machine 100 based on the determination of the operating parameter, such that the one or more components 116 of the work machine 100 is in alignment with the desired movement path 140, 142, 144. More particularly, the processor 150 may include the drive module 154 that may generate the first control signal "O1" for controlling the travel of the work machine 100. The drive module 154 may be communicably coupled to the path planning module 152 and the machine controller 134. The drive module 154 may receive the operating parameters, i.e., the maximum velocity, and the desired travel distance of the work machine 100 for generating the first control signal "O1".

In an example, the drive module 154 may convert the maximum velocity into track command values for operation of the ground engaging members 122. For example, the first control signal "O1" may be indicative of the track command values, such as a value of a desired track percentage flow to each ground engaging member 122, that may be required for moving the work machine 100 at the maximum velocity. The drive module 154 may transmit the first control signal "O1" to the machine controller 134. Based on the first control signal "O1", the machine controller 134 may generate signals, such as voltage signals. The signals generated by the machine controller 134 may be transmitted to machine components, such as, hydraulic valves or hydraulic motors, to operate the ground engaging members 122, so that the work machine 100 moves at the maximum velocity.

The processor 150 may further include the path tracker module 156. The path tracker module 156 may be communicably coupled to the first sensor 132, the second sensor 138, the input device 128, and the output device 130. The controller 146 may receive a feedback from the sensor 132, 138 to determine the alignment of the one or more components 116 of the work machine 100 with the desired movement path 140, 142, 144 during the travel of the work machine 100 along the desired movement path 140, 142, 144. In some examples, the feedback may be received after regular intervals of time.

In the illustrated example of FIG. 2, the path tracker module 156 may receive the feedback from the first sensor 132 and/or the second sensor 138 to determine the alignment of the work implement 116 with the desired movement path 140, 142, 144 during the travel of the work machine 100 along the desired movement path 140, 142, 144. In one example, the path tracker module 156 may receive input signals from the second sensor 138 to determine the alignment or the misalignment of the work machine 100 with the desired movement path 140, 142, 144 based on the location of the work machine 100 relative to the desired movement path 140, 142, 144. In another example, the path tracker module 156 may receive input signals from the first sensor 132 to determine the alignment or the misalignment of the work machine 100 with the desired movement path 140, 142, 144 based on the yaw angle of the operator cabin 126. In yet another example, the alignment or the misalignment of the work machine 100 may be determined based on a combination of the inputs received from the first and second sensors 132, 138.

In some examples, the feedback may be indicative of an amount by which the work machine 100 is offset from the desired movement path 140, 142, 144. In an example, the feedback may be indicative of a current offset distance between a center of the work machine 100 and the desired movement path 140, 142, 144. It should be noted that, in some examples, the path tracker module 156 may retrieve a value for an allowable offset distance from the memory 148. In situations wherein the current offset distance is greater than the allowable offset distance, the path tracker module 156 may determine the misalignment of the work machine 100 with the desired movement path 140, 142, 144.

Further, the controller 146 updates the operating parameter of the work machine 100 if the one or more components 116 of the work machine 100 is not in alignment with the desired movement path 140, 142, 144. More particularly, the path tracker module 156 may transmit information related to the misalignment of the work machine 100 relative to the desired movement path 140, 142, 144 to the path planning module 152. Based on the information from the path tracker module 156, the path planning module 152 may update the operating parameters of the work machine 100. It should be noted that the operating parameters may be updated in a manner that is similar to the determination of the operating parameters as explained earlier in this section. In some examples, the path planning module 152 may generate an improvised travel plan for the work machine 100 based on the feedback received from the path tracker module 156. The improvised travel plan may include the updated operating parameters that may allow the work machine 100 to realign with the desired movement path 140, 142, 144.

Further, the controller 146 may generate a second control signal "O2" for controlling the travel of the work machine 100 based on the updated operating parameters, such that the one or more components 116 of the work machine 100 is in alignment with the desired movement path 140, 142, 144. More particularly, the drive module 154 may generate the second control signal "O2" for controlling the travel of the work machine 100, such that the one or more components 116 of the work machine 100 is in alignment with the desired movement path 140, 142, 144. It should be noted that the second control signal "O2" may be generated in a manner that is similar to the determination of the first control signal "O1" as explained earlier in this section. Further, the drive module 154 may provide the second control signal "O2" to the machine controller 134 to control the ground engaging members 122 for moving the work machine 100 in alignment with the desired movement path 140, 142, 144. In some examples, the path tracker module 156 may provide a visual feed of the travel of the work machine 100 to notify the operator regarding the alignment of the work machine 100 with the desired movement path 140, 142, 144. In an example, the output device 130 may display the visual feed of the work machine 100 and the desired movement path 140, 142, 144. For example, an image or a video including a line/curve representing the desired movement path 140, 142, 144 may be overlayed on the ground surface 124. Such an image or video may additionally or optionally include a graphical representation of the work machine 100 so the machine operator is made aware of the alignment or misalignment of the work machine 100 with the desired movement path 140, 142, 144.

The movement of the work machine 100 along the respective desired movement paths 140, 142, 144 will not be explained in relation to FIGS. 3, 4, and 5. It should be noted that in FIGS. 3, 4, and 5, the work machine 100 embodied as the hydraulic excavator may travel in a reverse/backward direction with respect to the machine operator seated within the operator cabin 126. In other examples, the work machine 100 embodied as the hydraulic excavator may travel in a forward direction with respect to the machine operator seated within the operator cabin 126, based on a preference of the machine operator. Alternatively, when the work machine 100 is embodied as a motor grader, for example, the work machine 100 may move in the forward direction with respect to the machine operator seated within the operator cabin 126.

FIG. 3 illustrates the exemplary first desired movement path 140 for the work machine 100. The first desired movement path 140 includes the straight path herein. The work machine 100 may be disposed at a starting point "SP" at a beginning of an excavation operation. Further, the first desired movement path 140 includes a first excavation position "P1" of the work machine 100 and a second excavation position "P2" of the work machine 100. It should be noted that a distance defined between the first excavation position "P1" and the second excavation position "P2" is exemplary in nature and the distance may increase or decrease, as per application requirements.

For reaching the first excavation position "P1", the work machine 100 may travel in a direction "D1". Once the work machine 100 reaches the first excavation position "P1", the work machine 100 may perform excavation operations at the first excavation position "P1". Further, when the work machine 100 is to be moved from the first excavation position "P1" to the second excavation position "P2", the operator may send the input "I1" (see FIG. 2) to the controller 146 (see FIG. 2). Based on the receipt of the input "I1", the controller 146 may generate the first control signal "O1" (see FIG. 2) to move the work machine 100 from the first excavation position "P1" towards the second excavation position "P2" such that the work machine 100 is in alignment with the desired movement path 140.

Further, after performing excavation operations at the second excavation position "P2", the work machine 100 may further move along the desired movement path 140 in the reverse direction for performing excavation operations at one or more excavation points (not shown herein) along the desired movement path 140. In an example, the work machine 100 may move beyond the excavation points "P1", "P2" to ensure that excavation operations have been performed at all desired locations along the first desired movement path 140. In some examples, the path planning module 152 or the path tracker module 156 may control the movement of the work machine 100 such that, while moving along the first desired movement path 140, the work machine 100 may avoid movement of the work machine 100 over any areas that may have material dumped thereon.

FIG. 4 illustrates an exemplary second desired movement path 142 of the work machine 100. The second desired movement path 142 includes the number of straight paths 158, 160, 162. The work machine 100 may be disposed at a starting point "SP" at a beginning of an excavation operation. Further, the second desired movement path 142 includes a first excavation position "P1" of the work machine 100, a second excavation position "P2" of the work machine 100, and a third excavation position "P3" of the work machine 100. It should be noted that a distance defined between the first excavation position "P1", the second excavation position "P2", and the third excavation position "P3" is exemplary in nature and the distance may increase or decrease, as per application requirements. From the starting point "SP", the work machine 100 may move along a direction "D2" such that the work machine 100 may be disposed at the first excavation position "P1" for performing one or more excavation operations at the first excavation position "P1".

When the excavation operations are concluded at the first excavation position "P1", the work machine 100 may have to be moved to the second excavation position "P2". For this purpose, the controller 146 (see FIG. 2) determines one or more first straight paths 158 from the number of straight paths 158, 160, 162 and one or more second straight paths 160 from the number of straight paths 158, 160, 162, such that the first straight path 158 and the second straight path 160 are angularly disposed relative to each other. More particularly, the path planning module 152 (see FIG. 2) determines the first straight path 158 and the second straight path 160. Further, the path planning module 152 may also determine an angle "S1" defined between the first straight path 158 and the second straight path 160. In some examples, the angle "S1" defined between the first straight path 158 and the second straight path 160 may be less than or equal to about 180 degrees.

The controller 146 determines a transition path 164 based on the determination of the first straight path 158 and the second straight path 160 for moving the work machine 100 from the first straight path 158 to the second straight path 160. More particularly, the path planning module 152 determines the transition path 164 if the angle "S1" is less than or equal to about 180 degrees. In some examples, the angle "S1" may be less than 90 degrees. It should be noted that the term "transition path" as mentioned herein merely represents a path used by the work machine 100 to reach various excavation positions. It should be noted that the work machine 100 may not perform any excavation operations when the work machine 100 is moving on such transition paths.

In the illustrated example of FIG. 4, the path planning module 152 determines the one or more operating parameters of the work machine 100 to move the work machine 100 from the first excavation position "P1" to the second excavation position "P2" based on the data indicative of the position parameter of the work machine 100 and the data indicative of the desired movement path 142. Moreover, the controller 146 generates a third control signal "O3" (see FIG. 2) for moving the work machine 100 along the transition path 164 to dispose the work machine 100 on the second straight path 160. More particularly, the drive module 154 (see FIG. 2) generates the third control signal "O3" for moving the work machine 100 along the transition path 164 to dispose the work machine 100 on the second straight path 160. As illustrated herein, the first transition path 164 include the straight path 158 between the first excavation position "P1" and a location "L2". Accordingly, when the semi-autonomous travel feature is activated, the work machine 100 may move along the direction "D2" from the first excavation position "P1" to the location "L2". Moreover, the first transition path 164 may include a curved path between the location "L2" and a location "L3". It should be noted that the transition path 164 may be decided such that the work machine 100 may have to travel a minimum distance and such that the work machine 100 may cause minimum disturbance to the ground surface 124 (see FIG. 1). Further, when the semi-autonomous travel feature is activated, the work machine 100 may move along a direction "D3" from the location "L2" to the location "L3". The work machine 100 may then move along a direction "D4" from the location "L2" to the second excavation position "P2".

Moreover, for moving the work machine 100 from the second excavation position "P2" to the third excavation position "P3", the controller 146 may generate a transition path 166 for moving the work machine 100 from the second straight path 160 to the third straight path 162. The transition path 166 may be generated by the path planning module 152 in a manner similar to the generation of the transition path 164. Further, for moving the work machine 100 from the second excavation position "P2" to the third excavation position "P3", the work machine 100 may move in a direction that is opposite to the direction "D4" to reach the location "L3". From the location "L3", the work machine 100 may move along a direction "D5" to a location "L4". The work machine 100 may then move along a direction "D6" from the location "L4" to reach the third excavation position "P3". Further, after performing excavation operations at the third excavation position "P3", the work machine 100 may move in a direction opposite to the direction "D6" for performing excavation operations at other excavation points (not shown herein) along the third straight path 162.

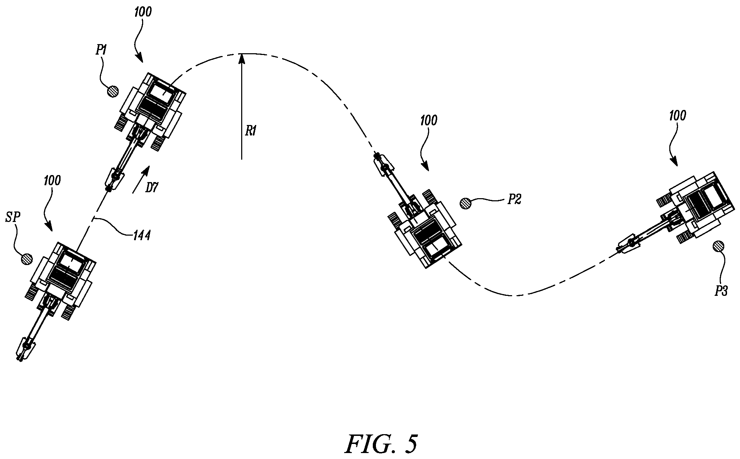

In an example, the work machine 100 may move beyond the excavation points "P1", "P2", "P3" to ensure that excavation operations have been performed at all desired locations along the second desired movement path 142. In some examples, the path planning module 152 or the path tracker module 156 may control the movement of the work machine 100 such that, while moving along the second desired movement path 142, the work machine 100 may avoid movement of the work machine 100 over any areas that may have material dumped thereon. It should be noted that, for the purpose of clarity, the starting point "SP", the excavation points "P1", "P2", "P3", and the locations "L3", "L4", and "L5" are marked outside of the second desired movement path 142. However, in actuality, the starting point "SP", the excavation points "P1", "P2", "P3", and the locations "L3", "L4", and "L5" may be coincident with the second desired movement path 142. FIG. 5 illustrates the exemplary third desired movement path 144 of the work machine 100. The third desired movement path 144 includes a curved path herein. The work machine 100 may be disposed at a starting point "SP" at a beginning of an excavation operation. Further, the third desired movement path 144 includes a first excavation position "P1" of the work machine 100 and a second excavation position "P2" of the work machine 100. It should be noted that a distance defined between the first excavation position "P1" and the second excavation position "P2" is exemplary in nature and the distance may increase or decrease, as per application requirements. As illustrated in FIG. 5, a path between the first excavation position "P1" and the second excavation position "P2" is a curved path. For reaching the first excavation position "P1", the work machine 100 may travel in a direction "D7". Once the work machine 100 reaches the first excavation position "P1", the work machine 100 may perform excavation operations at the first excavation position "P1".

Further, when the work machine 100 is to be moved from the first excavation position "P1" to the second excavation position "P2", the machine operator may send the input "I1" (see FIG. 2) to the controller 146 (see FIG. 2). Based on the receipt of the input "I1", the controller 146 may determine the desired movement path 144. In some examples, when the desired movement path 144 is curved, the path planning module 152 (see FIG. 2) may determine a radius of curvature "R1" of the desired movement path 144. If the radius of curvature "R1" is greater than a predetermined value, the path planning module 152 may generate the operating parameters for the travel of the work machine 100. The predetermined value for the radius of curvature "R1" may correspond to a maximum value for the radius of curvature "R1" along which the work machine 100 may be able to move. Further, based on the generation of the operating parameters, the controller 146 may generate the first control signal "O1" to move the work machine 100 from the first excavation position "P1" to the second excavation position "P2", such that the work machine 100 is in alignment with the desired movement path 144. However, if the radius of curvature "R1" of the desired movement path 144 is lesser than the predetermined value, the path tracker module 156 may generate signals to move the work machine 100 along a transition path, similar to the transition paths 164, 166 explained in relation to FIG. 4.

Further, after performing excavation operations at the second excavation position "P2", the work machine 100 may move along the desired movement path 144 in the reverse direction for performing excavation operations at other excavation points (not shown herein) along the desired movement path 144. In some examples, the work machine 100 may move beyond the excavation points "P1", "P2" to ensure that excavation operations have been performed at all desired locations along the third desired movement path 144. In some examples, the path planning module 152 or the path tracker module 156 may control the movement of the work machine 100 such that while moving along the third desired movement path 144, the work machine 100 may avoid movement of the work machine 100 over any areas that may have material dumped thereon. It should be noted that, for the purpose of clarity, the starting point "SP" and the excavation points "P1", "P2", "P3" are marked outside of the third desired movement path 144. However, in actuality, the starting point "SP" and the excavation points "P1", "P2", "P3" may be coincident with the third desired movement path 144.

The controller 146 and the machine controller 134 (see FIG. 2) may embody a single microprocessor or multiple microprocessors for receiving signals from various components of the work machine 100. Numerous commercially available microprocessors may be configured to perform the functions of the controller 146 and the machine controller 134. A person of ordinary skill in the art will appreciate that the controller 146 and the machine controller 134 may additionally include other components and may also perform other functions not described herein. A person of ordinary skill in the art will appreciate that the controller 146 and the machine controller 134 may include multiple components for performing intended functions/operations.

### Industrial Applicability

The present disclosure relates to the system 136 and a method 600 for controlling the travel of the work machine 100 during the excavation operation. During excavation operations, it may be desirable that the work machine 100 is in alignment with the desired movement path 140, 142, 144. The system 136 and the method 600 describes techniques that allow alignment of the work machine 100 with the desired movement path 140, 142, 144. Thus, the work machine 100 may cause minimal disturbance to the ground surface 124 which may in turn cause minimal inadvertent displacement of soil from the ground surface 124. Furthermore, the alignment of the work machine 100 with the desired movement path 140, 142, 144 may increase efficiency and productivity of the excavation operation while reducing operation time and operator efforts. Additionally, the work machine 100 aligned with the desired movement path 140, 142, 144 may allow formation of a straighter trench or foundation.

The semi-autonomous travel feature enabled by the system 136 of the present disclosure aligns the work machine 100 with respect to the desired movement path 140, 142, 144 during the travel of the work machine 100. The semi-autonomous travel feature is enabled during the travel of the work machine 100 between various excavation positions. Further, the semi-autonomous travel feature may monitor the alignment of the work machine 100 relative to the desired movement path 140, 142, 144 in real time by providing positioning error feedback. As some work machines, such as the work machine 100 described herein, may not be able to move sideways, the path planning module 152 may generate an improvised travel plan by generating updated operating parameters so that the work machine 100 may realign with the desired movement path 140, 142, 144 without causing disturbances to the ground surface 124. Further, the real time tracking of the alignment by the path tracker module 156 of the controller 146 may reduce operator efforts as the machine operator may not have to spend additional time and fuel aligning the work machine 100 with the desired movement path 140, 142, 144. Moreover, the transition paths 164, 166 may allow the work machine 100 to easily execute the excavation operation on straight paths or curved paths having small radius of curvatures. Additionally, the transition paths 164, 166 may be defined in such a way that the travel of the work machine 100 along the transition paths 164, 166 may create minimum disturbance to the ground surface 124.

Further, the semi-autonomous travel feature may be initiated by the machine operator based on usage of the input devices 128. Furthermore, when the semi-autonomous travel feature is activated, the machine operator may control the maximum velocity of the work machine 100 and increase or decrease the desired travel distance. Moreover, the machine operator may be able to halt the work machine 100 before the work machine 100 has travelled the desired travel distance. Moreover, the machine operator may halt the work machine 100 after the work machine 100 has travelled the desired travel distance. However, when the semi-autonomous travel feature is activated, the controller 146 may not allow the machine operator to steer the work machine 100. **In** some examples, the machine operator may deactivate the semi-autonomous travel feature based on activation of the brakes or usage of a dedicated input device 128, as per application requirements.

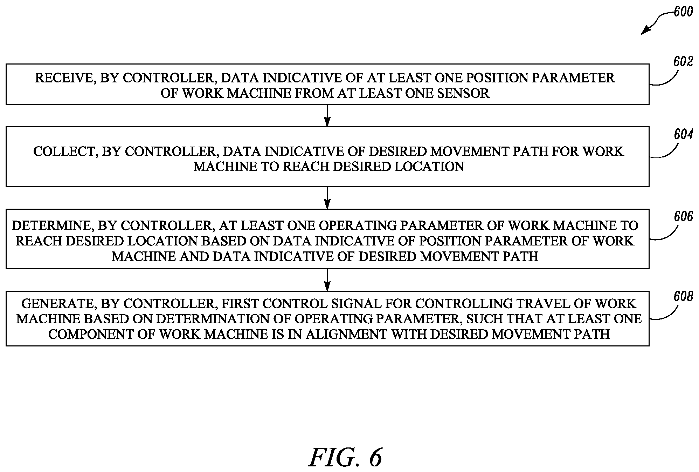

FIG. 6 illustrates a flowchart for the method 600 for controlling the travel of the work machine 100 during the excavation operation. At step 602, the controller 146 receives data indicative of the one or more position parameters of the work machine 100 from the one or more sensors 132, 138. The position parameter includes one or more of the orientation of the work machine 100 and the location of the work machine 100. Further, the controller 146 receives the input "I1" from the machine operator for initiating the travel of the work machine 100, such that the one or more components 116 of the work machine 100 is in alignment with the desired movement path 140, 142, 144.

At step 604, the controller 146 collects data indicative of the desired movement path 140, 142, 144 for the work machine 100 to reach the desired location "L1". Further, the desired movement path 140, 142, 144 is prestored in the memory 148 associated with the controller 146, provided as the path input "I2" by the machine operator, or determined by the controller 146.

At step 606, the controller 146 determines the one or more operating parameters of the work machine 100 to reach the desired location "L1" based on the data indicative of the position parameter of the work machine 100 and the data indicative of the desired movement path 140, 142, 144. The operating parameter includes one or more of the desired travel distance of the work machine 100, the maximum velocity of the work machine 100, and the desired travel direction of the work machine 100. Additionally, the controller 146 may receive the input "I3" from the machine operator for one or more of increasing the desired travel distance and decreasing the desired travel distance. Further, the controller 146 receives the value of the desired travel distance from the memory 148 associated with the controller 146. Moreover, the value of the maximum velocity is controllable by the machine operator.

At step 608, the controller 146 generates the first control signal "O1" for controlling the travel of the work machine 100 based on the determination of the operating parameter, such that the one or more components 116 of the work machine 100 is in alignment with the desired movement path 140, 142, 144. The one or more components 116 of the work machine 100 includes the work implement 116.

Further, in some examples, the controller 146 receives the feedback from the sensor 132, 138 to determine the alignment of the one or more components 116 of the work machine 100 with the desired movement path 140, 142, 144 during the travel of the work machine 100 along the desired movement path 140, 142, 144. Furthermore, the controller 146 updates the operating parameter of the work machine 100 if the one or more components 116 of the work machine 100 is not in alignment with the desired movement path 140, 142, 144. Moreover, the controller 146 generates the second control signal "O2" for controlling the travel of the work machine 100 based on the updated operating parameter, such that the one or more components 116 of the work machine 100 is in alignment with the desired movement path 140, 142, 144.

**In** some examples, the desired movement path 140, 142, 144 includes one or more of the straight path, the curved path, the number of straight paths 158, 160, 162, and a combination thereof. **In** an example, the controller 146 determines the one or more first straight path 158 from the number of straight paths 158, 160, 162 and the one or more second straight path 160 from the number of straight paths 158, 160, 162, such that the first straight path 158 and the second straight path 160 are angularly disposed relative to each other. The angle "S1" defined between the first straight path 158 and the second straight path 160 may be less than or equal to about 180 degrees. The controller 146 also determines the transition path 164 based on the determination of the first straight path 158 and the second straight path 160 for moving the work machine 100 from the first straight path 158 to the second straight path 160. The controller 146 generates the third control signal "O3" for moving the work machine 100 along the transition path 164 to dispose the work machine 100 on the second straight path 160.

## Claims

1. A method for controlling a travel of a work machine (100) during an excavation operation, the method (600) comprising:
receiving (step 602), by a controller (146), data indicative of a position parameter of the work machine (100) from a sensor (138), wherein the position parameter includes at least one of an orientation of the work machine (100) and a location of the work machine (100);
collecting (step 604), by the controller (146), data indicative of a desired movement path (140, 142, 144) for the work machine (100) to reach a desired location (L1);
determining (step 606), by the controller (146), at least one operating parameter of the work machine (100) to reach the desired location (L1) based on the data indicative of the position parameter of the work machine (100) and the data indicative of the desired movement path (140, 142, 144), wherein the operating parameter includes at least one of a desired travel distance of the work machine (100), a maximum velocity of the work machine (100), and a desired travel direction of the work machine (100);
generating (step 608), by the controller (146), a first control signal (O1) for controlling the travel of the work machine (100) based on the determination of the operating parameter, such that at least one component (116) of the work machine (100) is in alignment with the desired movement path (140, 142, 144);
wherein the at least one component (116) of the work machine (100) includes a work implement (116);
the method (600) further comprising:
receiving, by the controller (146), a feedback from the sensor (138) to determine the alignment of the at least one component (116) of the work machine (100) with the desired movement path (140, 142, 144) during the travel of the work machine (100) along the desired movement path (140, 142, 144);
updating, by the controller (146), the operating parameter of the work machine (100) if the at least one component (116) of the work machine (100) is not in alignment with the desired movement path (140, 142, 144); and
generating, by the controller (146), a second control signal (O2) for controlling the travel of the work machine (100) based on the updated operating parameter, such that the at least one component (116) of the work machine (100) is in alignment with the desired movement path (140, 142, 144);
wherein the desired movement path (140, 142, 144) includes at least one of a straight path, a curved path, a plurality of straight paths (158, 160), and a combination thereof;
**characterized in that** the method (600) further comprises:
determining, by the controller (146), at least one first straight path (158) from the plurality of straight paths (158, 160) and at least one second straight path (160) from the plurality of straight paths (158, 160), such that the first straight path (158) and the second straight path (160) are angularly disposed relative to each other, an angle (S1) defined between the first straight path (158) and the second straight path (160) being at least one of less than and equal to about 180 degrees;
determining, by the controller (146), a transition path (164) based on the determination of the first straight path (158) and the second straight path (160) for moving the work machine (100) from the first straight path (158) to the second straight path (160); and
generating, by the controller (146), a third control signal (O3) for moving the work machine (100) along the transition path (164) to dispose the work machine (100) on the second straight path (160);
wherein the work machine (100) does not perform the excavation operation when the work machine (100) is moving on the transition path.

2. The method (600) of claim 1, further comprising receiving, by the controller (146), an input "I1" from a machine operator for initiating the travel of the work machine (100), such that the at least one component (116) of the work machine (100) is in alignment with the desired movement path (140, 142, 144).

3. The method (600) of claim 1, wherein the desired movement path (140, 142, 144) is at least one of prestored in a memory (148) associated with the controller (146), provided as a path input "I2" by a machine operator, and determined by the controller (146).

4. The method (600) of claim 1, further comprising receiving, by the controller (146), an input (I3) from a machine operator for at least one of increasing the desired travel distance and decreasing the desired travel distance.

5. The method (600) of claim 1, wherein a value of the maximum velocity is controllable by a machine operator.

6. The method (600) of claim 1, wherein a value of the desired travel distance is prestored in a memory (148) associated with the controller (146).

7. A system (136) for controlling a travel of a work machine (100) during an excavation operation, the system (136) comprising:
at least one sensor (138) configured to generate data indicative of at least one position parameter of the work machine (100), wherein the position parameter includes at least one of an orientation of the work machine (100) and a location of the work machine (100); and
a controller (146) communicably coupled with the sensor (138), wherein the controller (146) is configured to:
receive the data indicative of the position parameter of the work machine (100) from the sensor (138);
collect data indicative of a desired movement path (140, 142, 144) for the work machine (100) to reach a desired location (L1);
determine at least one operating parameter of the work machine (100) to reach the desired location (L1) based on the data indicative of the position parameter of the work machine (100) and the data indicative of the desired movement path (140, 142, 144), wherein the operating parameter includes at least one of a desired travel distance of the work machine (100), a maximum velocity of the work machine (100), and a desired travel direction of the work machine (100); and
generate a first control signal (O1) for controlling the travel of the work machine (100) based on the determination of the operating parameter, such that at least one component (116) of the work machine (100) is in alignment with the desired movement path (140, 142, 144);
wherein the at least one component (116) of the work machine (100) includes a work implement (116);
wherein the controller (146) is further configured to:
receive a feedback from the sensor (138) to determine the alignment of the at least one component (116) of the work machine (100) with the desired movement path (140, 142, 144) during the travel of the work machine (100) along the desired movement path (140, 142, 144);
update the operating parameter of the work machine (100) if the at least one component (116) of the work machine (100) is not in alignment with the desired movement path (140, 142, 144); and
generate a second control signal (O2) for controlling the travel of the work machine (100) based on the updated operating parameter, such that the at least one component (116) of the work machine (100) is in alignment with the desired movement path (140, 142, 144);
wherein the desired movement path (140, 142, 144) includes at least one of a straight path, a curved path, a plurality of straight paths (158, 160), and a combination thereof;
**characterized in that**
the controller (146) is further configured to:
determine at least one first straight path (158) from the plurality of straight paths (158, 160) and at least one second straight path (160) from the plurality of straight paths (158, 160), such that the first straight path (158) and the second straight path (160) are angularly disposed relative to each other, an angle (S1) defined between the first straight path (158) and the second straight path (160) being at least one of less than and equal to about 180 degrees;
determine a transition path (164) based on the determination of the first straight path (158) and the second straight path (160) for moving the work machine (100) from the first straight path (158) to the second straight path (160); and
generate a third control signal (O3) for moving the work machine (100) along the transition path (164) to dispose the work machine (100) on the second straight path (160); and
wherein the work machine (100) does not perform the excavation operation when the work machine (100) is moving on the transition path.

8. The system (136) of claim 7, wherein the controller (146) is configured to receive an input "I1" from a machine operator for initiating the travel of the work machine (100), such that the at least one component (116) of the work machine (100) is in alignment with the desired movement path (140, 142, 144).

9. The system (136) of claim 7, wherein the desired movement path (140, 142, 144) is at least one of prestored in a memory (148) associated with the controller (146), provided as a path input "I2" by a machine operator, and determined by the controller (146).

10. The system (136) of claim 7, wherein the controller (146) is configured to receive an input (I3) from a machine operator for at least one of increasing the desired travel distance and decreasing the desired travel distance.

11. The system (136) of claim 7, wherein a value of the maximum velocity is controllable by a machine operator.

12. The system (136) of claim 7, wherein a value of the desired travel distance is prestored in a memory (148) associated with the controller (146).

## Patentansprüche

1. Verfahren zum Steuern einer Fahrt einer Arbeitsmaschine (100) während eines Aushubvorgangs, wobei das Verfahren (600) umfasst:
Empfangen (Schritt 602), durch eine Steuerung (146), von Daten von einem Sensor (138), die einen Positionsparameter der Arbeitsmaschine (100) angeben, wobei der Positionsparameter mindestens eines von einer Ausrichtung der Arbeitsmaschine (100) und einem Standort der Arbeitsmaschine (100) einschließt;
Sammeln (Schritt 604), durch die Steuerung (146), von Daten, die einen gewünschten Bewegungspfad (140, 142, 144) für die Arbeitsmaschine (100) angeben, um einen gewünschten Ort (L1) zu erreichen;
Bestimmen (Schritt 606), durch die Steuerung (146), mindestens eines Betriebsparameters der Arbeitsmaschine (100), um den gewünschten Ort (L1) zu erreichen, basierend auf den Daten, die den Positionsparameter der Arbeitsmaschine (100) angeben, und den Daten, die den gewünschten Bewegungspfad (140, 142, 144) angeben, wobei der Betriebsparameter mindestens eine gewünschte Fahrstrecke der Arbeitsmaschine (100), eine maximale Geschwindigkeit der Arbeitsmaschine (100) und eine gewünschte Fahrrichtung der Arbeitsmaschine (100) einschließt;
Erzeugen (Schritt 608), durch die Steuerung (146). eines ersten Steuersignals (O1) zum Steuern der Fahrt der Arbeitsmaschine (100) basierend auf der Bestimmung des Betriebsparameters, sodass mindestens eine Komponente (116) der Arbeitsmaschine (100) mit dem gewünschten Bewegungspfad (140, 142, 144) ausgerichtet ist;
wobei die mindestens eine Komponente (116) der Arbeitsmaschine (100) ein Arbeitsgerät (116) einschließt;
wobei das Verfahren (600) ferner umfasst:
Empfangen, durch die Steuerung (146), einer Rückmeldung vom Sensor (138), um die Ausrichtung der mindestens einen Komponente (116) der Arbeitsmaschine (100) mit dem gewünschten Bewegungspfad (140, 142, 144) während der Fahrt der Arbeitsmaschine (100) entlang des gewünschten Bewegungspfads (140, 142, 144) zu bestimmen;
Aktualisieren, durch die Steuerung (146), des Betriebsparameters der Arbeitsmaschine (100), wenn die mindestens eine Komponente (116) der Arbeitsmaschine (100) nicht mit dem gewünschten Bewegungspfad (140, 142, 144) ausgerichtet ist; und
Erzeugen, durch die Steuerung (146), eines zweiten Steuersignals (O2) zum Steuern der Fahrt der Arbeitsmaschine (100) basierend auf dem aktualisierten Betriebsparameter, sodass die mindestens eine Komponente (116) der Arbeitsmaschine (100) mit dem gewünschten Bewegungspfad (140, 142, 144) ausgerichtet ist;
wobei der gewünschte Bewegungspfad (140, 142, 144) mindestens eines von einem geraden Pfad, einem gekrümmten Pfad, einer Vielzahl gerader Pfade (158, 160) und einer Kombination davon einschließt;
**dadurch gekennzeichnet, dass** das Verfahren (600) ferner umfasst:
Bestimmen, durch die Steuerung (146), mindestens eines ersten geraden Pfads (158) aus der Vielzahl von geraden Pfaden (158, 160) und mindestens eines zweiten geraden Pfads (160) aus der Vielzahl von geraden Pfaden (158, 160), sodass der erste gerade Pfad (158) und der zweite gerade Pfad (160) in einem Winkel relativ zueinander angeordnet sind, wobei ein zwischen dem ersten geraden Pfad (158) und dem zweiten geraden Pfad (160) definierter Winkel (S1) mindestens entweder kleiner oder gleich etwa 180 Grad ist;
Bestimmen, durch die Steuerung (146), eines Übergangspfads (164) basierend auf der Bestimmung des ersten geraden Pfads (158) und des zweiten geraden Pfads (160) zum Bewegen der Arbeitsmaschine (100) vom ersten geraden Pfad (158) zum zweiten geraden Pfad (160) und
Erzeugen, durch die Steuerung (146), eines dritten Steuersignals (O3) zum Bewegen der Arbeitsmaschine (100) entlang des Übergangspfads (164), um die Arbeitsmaschine (100) auf dem zweiten geraden Pfad (160) anzuordnen;
wobei die Arbeitsmaschine (100) den Aushubvorgang nicht durchführt, wenn sich die Arbeitsmaschine (100) auf dem Übergangspfad bewegt.

2. Verfahren (600) nach Anspruch 1, ferner umfassend das Empfangen, durch die Steuerung (146), einer Eingabe "I1" von einem Maschinenbediener zum Initiieren der Fahrt der Arbeitsmaschine (100), sodass die mindestens eine Komponente (116) der Arbeitsmaschine (100) mit dem gewünschten Bewegungspfad (140, 142, 144) ausgerichtet ist.

3. Verfahren (600) nach Anspruch 1, wobei der gewünschte Bewegungspfad (140, 142, 144) mindestens eines von in einem der Steuerung (146) zugeordneten Speicher (148) vorgespeichert ist, von einem Maschinenbediener als eine Pfadeingabe "I2" bereitgestellt wird oder von der Steuerung (146) bestimmt wird.

4. Verfahren (600) nach Anspruch 1, ferner umfassend das Empfangen, durch die Steuerung (146), einer Eingabe (13) von einem Maschinenbediener zu mindestens einem von Verlängern der gewünschten Fahrstrecke und Verkürzen der gewünschten Fahrstrecke.

5. Verfahren (600) nach Anspruch 1, wobei ein Wert der Maximalgeschwindigkeit durch einen Maschinenbediener steuerbar ist.

6. Verfahren (600) nach Anspruch 1, wobei ein Wert der gewünschten Fahrstrecke in einem Speicher (148) vorgespeichert wird, welcher der Steuerung (146) zugeordnet ist.

7. System (136) zum Steuern einer Fahrt einer Arbeitsmaschine (100) während eines Aushubvorgangs, wobei das System (136) umfasst:
mindestens einen Sensor (138), der konfiguriert ist, um Daten zu erzeugen, die mindestens einen Positionsparameter der Arbeitsmaschine (100) angeben, wobei der Positionsparameter mindestens eines von einer Ausrichtung der Arbeitsmaschine (100) und einem Standort der Arbeitsmaschine (100) einschließt; und
eine Steuerung (146), die mit dem Sensor (138) kommunikativ gekoppelt ist, wobei die Steuerung (146) konfiguriert ist zum:
Empfangen der Daten, die den Positionsparameter der Arbeitsmaschine (100) angeben, vom Sensor (138);
Sammeln von Daten, die einen gewünschten Bewegungspfad (140, 142, 144) für die Arbeitsmaschine (100) angeben, um einen gewünschten Ort (L1) zu erreichen;
Bestimmen von mindestens einem Betriebsparameter der Arbeitsmaschine (100), um den gewünschten Ort (L1) zu erreichen, basierend auf den Daten, die den Positionsparameter der Arbeitsmaschine (100) angeben, und den Daten, die den gewünschten Bewegungspfad (140, 142, 144) angeben, wobei der Betriebsparameter mindestens eines von einer gewünschten Fahrstrecke der Arbeitsmaschine (100), einer maximalen Geschwindigkeit der Arbeitsmaschine (100) und einer gewünschten Fahrrichtung der Arbeitsmaschine (100) einschließt. und
Erzeugen eines ersten Steuersignals (O1) zum Steuern der Fahrt der Arbeitsmaschine (100) basierend auf der Bestimmung des Betriebsparameters, sodass mindestens eine Komponente (116) der Arbeitsmaschine (100) mit dem gewünschten Bewegungspfad (140, 142, 144) ausgerichtet ist;
wobei die mindestens eine Komponente (116) der Arbeitsmaschine (100) ein Arbeitsgerät (116) einschließt;
wobei die Steuerung (146) ferner konfiguriert ist zum:
Empfangen einer Rückmeldung vom Sensor (138), um die Ausrichtung der mindestens einen Komponente (116) der Arbeitsmaschine (100) mit dem gewünschten Bewegungspfad (140, 142, 144) während der Fahrt der Arbeitsmaschine (100) entlang des gewünschten Bewegungspfades (140, 142, 144) zu bestimmen;
Aktualisieren des Betriebsparameters der Arbeitsmaschine (100), wenn die mindestens eine Komponente (116) der Arbeitsmaschine (100) nicht mit dem gewünschten Bewegungspfad (140, 142, 144) ausgerichtet ist; und
Erzeugen eines zweiten Steuersignals (O2) zum Steuern der Fahrt der Arbeitsmaschine (100) basierend auf dem aktualisierten Betriebsparameter, sodass die mindestens eine Komponente (116) der Arbeitsmaschine (100) mit dem gewünschten Bewegungspfad (140, 142, 144) ausgerichtet ist;
wobei der gewünschte Bewegungspfad (140, 142, 144) mindestens eines von einem geraden Pfad, einem gekrümmten Pfad, einer Vielzahl gerader Pfade (158, 160) und einer Kombination davon einschließt;
**dadurch gekennzeichnet, dass** die Steuerung (146) ferner konfiguriert ist zum:
Bestimmen des mindestens einen ersten geraden Pfades (158) aus der Vielzahl von geraden Pfaden (158, 160) und mindestens eines zweiten geraden Pfades (160) aus der Vielzahl von geraden Pfaden (158, 160), sodass der erste gerade Pfad (158) und der zweite gerade Pfad (160) in einem Winkel zueinander angeordnet sind, wobei ein zwischen dem ersten geraden Pfad (158) und dem zweiten geraden Pfad (160) definierter Winkel (S1) mindestens kleiner oder gleich etwa 180 Grad ist;
Bestimmen eines Übergangspfads (164) basierend auf der Bestimmung des ersten geraden Pfads (158) und des zweiten geraden Pfads (160) zum Bewegen der Arbeitsmaschine (100) vom ersten geraden Pfad (158) zum zweiten geraden Pfad (160) und
Erzeugen eines dritten Steuersignals (O3) zum Bewegen der Arbeitsmaschine (100) entlang des Übergangspfads (164), um die Arbeitsmaschine (100) auf dem zweiten geraden Pfad (160) anzuordnen; und
wobei die Arbeitsmaschine (100) den Aushubvorgang nicht durchführt, wenn sich die Arbeitsmaschine (100) auf dem Übergangspfad bewegt.

8. System (136) nach Anspruch 7, wobei die Steuerung (146) konfiguriert ist, um eine Eingabe "I1" von einem Maschinenbediener zum Initiieren der Fahrt der Arbeitsmaschine (100) zu empfangen, sodass die mindestens eine Komponente (116) der Arbeitsmaschine (100) mit dem gewünschten Bewegungspfad (140, 142, 144) ausgerichtet ist.

9. System (136) nach Anspruch 7, wobei der gewünschte Bewegungspfad (140, 142, 144) mindestens eines von in einem der Steuerung (146) zugeordneten Speicher (148) vorgespeichert ist, von einem Maschinenbediener als Pfadeingabe "I2" bereitgestellt wird oder von der Steuerung (146) bestimmt wird.

10. System (136) nach Anspruch 7, wobei die Steuerung (146) konfiguriert ist, um eine Eingabe (13) von einem Maschinenbediener für mindestens eines von Verlängern der gewünschten Fahrstrecke und Verkürzen der gewünschten Fahrstrecke zu empfangen.

11. System (136) nach Anspruch 7, wobei ein Wert der Maximalgeschwindigkeit durch einen Maschinenbediener steuerbar ist.

12. System (136) nach Anspruch 7, wobei ein Wert der gewünschten Fahrstrecke in einem Speicher (148) vorgespeichert ist, welcher der Steuerung (146) zugeordnet ist.

## Revendications

1. Procédé permettant de commander un déplacement d'une machine de travail (100) pendant une opération d'excavation, le procédé (600) comprenant :
la réception (étape 602), par un organe de commande (146), de données indiquant un paramètre de position de la machine de travail (100) en provenance d'un capteur (138), dans lequel le paramètre de position comporte au moins l'une parmi une orientation de la machine de travail (100) et une localisation de la machine de travail (100) ;
la collecte (étape 604), par l'organe de commande (146), de données indiquant une trajectoire de mouvement souhaitée (140, 142, 144) pour que la machine de travail (100) atteigne une localisation souhaitée (L1) ;
la détermination (étape 606), par l'organe de commande (146), d'au moins un paramètre opératoire de la machine de travail (100) pour atteindre la localisation souhaitée (L1) en fonction des données indiquant le paramètre de position de la machine de travail (100) et des données indiquant la trajectoire de mouvement souhaitée (140, 142, 144), dans lequel le paramètre opératoire comporte au moins l'une parmi une distance de déplacement souhaitée de la machine de travail (100), une vitesse maximale de la machine de travail (100) et une direction de déplacement souhaitée de la machine de travail (100) ;
la génération (étape 608), par l'organe de commande (146), d'un premier signal de commande (O1) permettant de commander le déplacement de la machine de travail (100) en fonction de la détermination du paramètre opératoire, de telle sorte qu'au moins un composant (116) de la machine de travail (100) est en alignement avec la trajectoire de mouvement souhaitée (140, 142, 144) ;
dans lequel l'au moins un composant (116) de la machine de travail (100) comporte un outil de travail (116) ;
le procédé (600) comprenant en outre :
la réception, par l'organe de commande (146), d'une rétroaction en provenance du capteur (138) pour déterminer l'alignement de l'au moins un composant (116) de la machine de travail (100) avec la trajectoire de mouvement souhaitée (140, 142, 144) pendant le déplacement de la machine de travail (100) le long de la trajectoire de mouvement souhaitée (140, 142, 144) ;
la mise à jour, par l'organe de commande (146), du paramètre opératoire de la machine de travail (100) si l'au moins un composant (116) de la machine de travail (100) n'est pas en alignement avec la trajectoire de mouvement souhaitée (140, 142, 144) ; et
la génération, par l'organe de commande (146), d'un deuxième signal de commande (O2) permettant de commander le déplacement de la machine de travail (100) en fonction du paramètre opératoire mis à jour, de telle sorte que l'au moins un composant (116) de la machine de travail (100) est en alignement avec la trajectoire de mouvement souhaitée (140, 142, 144) ;
dans lequel la trajectoire de mouvement souhaitée (140, 142, 144) comporte au moins l'une parmi une trajectoire linéaire, une trajectoire courbée, une pluralité de trajectoires linéaires (158, 160) et une combinaison de celles-ci ;
**caractérisé en ce que** le procédé (600) comprend en outre :
la détermination, par l'organe de commande (146), d'au moins une première trajectoire linéaire (158) parmi la pluralité de trajectoires linéaires (158, 160) et d'au moins une seconde trajectoire linéaire (160) parmi la pluralité de trajectoires linéaires (158, 160), de telle sorte que la première trajectoire linéaire (158) et la seconde trajectoire linéaire (160) sont placées de manière angulaire l'une par rapport à l'autre, un angle (S1) défini entre la première trajectoire linéaire (158) et la seconde trajectoire linéaire (160) étant au moins l'un parmi inférieur à et égal à environ 180 degrés ;
la détermination, par l'organe de commande (146), d'une trajectoire de transition (164) en fonction de la détermination de la première trajectoire linéaire (158) et de la seconde trajectoire linéaire (160) permettant de mouvoir la machine de travail (100) de la première trajectoire linéaire (158) à la seconde trajectoire linéaire (160) ; et
la génération, par l'organe de commande (146), d'un troisième signal de commande (O3) permettant de mouvoir la machine de travail (100) le long de la trajectoire de transition (164) pour placer la machine de travail (100) sur la seconde trajectoire linéaire (160) ;
dans lequel la machine de travail (100) ne met pas en œuvre l'opération d'excavation lorsque la machine de travail (100) est en mouvement sur la trajectoire de transition.

2. Procédé (600) selon la revendication 1, comprenant en outre la réception, par l'organe de commande (146), d'une entrée « I1 » en provenance d'un opérateur de machine permettant d'initier le déplacement de la machine de travail (100), de telle sorte que l'au moins un composant (116) de la machine de travail (100) est en alignement avec la trajectoire de mouvement souhaitée (140, 142, 144).

3. Procédé (600) selon la revendication 1, dans lequel la trajectoire de mouvement souhaitée (140, 142, 144) est au moins l'une parmi préstockée dans une mémoire (148) associée à l'organe de commande (146), fournie en tant qu'entrée de trajectoire « I2 » par un opérateur de machine, et déterminée par l'organe de commande (146).

4. Procédé (600) selon la revendication 1, comprenant en outre la réception, par l'organe de commande (146), d'une entrée (13) en provenance d'un opérateur de machine pour au moins l'une parmi une augmentation de la distance de déplacement souhaitée et une diminution de la distance de déplacement souhaitée.

5. Procédé (600) selon la revendication 1, dans lequel une valeur de la vitesse maximale est commandable par un opérateur de machine.

6. Procédé (600) selon la revendication 1, dans lequel une valeur de la distance de déplacement souhaitée est préstockée dans une mémoire (148) associée à l'organe de commande (146).

7. Système (136) permettant de commander un déplacement d'une machine de travail (100) pendant une opération d'excavation, le système (136) comprenant :
au moins un capteur (138) configuré pour générer des données indiquant au moins un paramètre de position de la machine de travail (100), dans lequel le paramètre de position comporte au moins l'une parmi une orientation de la machine de travail (100) et une localisation de la machine de travail (100) ; et
un organe de commande (146) couplé par communication au capteur (138), dans lequel l'organe de commande (146) est configuré pour :
recevoir les données indiquant le paramètre de position de la machine de travail (100) en provenance du capteur (138) ;
collecter des données indiquant une trajectoire de mouvement souhaitée (140, 142, 144) pour que la machine de travail (100) atteigne une localisation souhaitée (L1) ;
déterminer au moins un paramètre opératoire de la machine de travail (100) pour atteindre la localisation souhaitée (L1) en fonction des données indiquant le paramètre de position de la machine de travail (100) et des données indiquant la trajectoire de mouvement souhaitée (140, 142, 144), dans lequel le paramètre opératoire comporte au moins l'une parmi une distance de déplacement souhaitée de la machine de travail (100), une vitesse maximale de la machine de travail (100) et une direction de déplacement souhaitée de la machine de travail (100) ; et
générer un premier signal de commande (O1) permettant de commander le déplacement de la machine de travail (100) en fonction de la détermination du paramètre opératoire, de telle sorte qu'au moins un composant (116) de la machine de travail (100) est en alignement avec la trajectoire de mouvement souhaitée (140, 142, 144) ;
dans lequel l'au moins un composant (116) de la machine de travail (100) comporte un outil de travail (116) ;
dans lequel l'organe de commande (146) est configuré en outre pour :
recevoir une rétroaction en provenance du capteur (138) pour déterminer l'alignement de l'au moins un composant (116) de la machine de travail (100) avec la trajectoire de mouvement souhaitée (140, 142, 144) pendant le déplacement de la machine de travail (100) le long de la trajectoire de mouvement souhaitée (140, 142, 144) ;
mettre à jour le paramètre opératoire de la machine de travail (100) si l'au moins un composant (116) de la machine de travail (100) n'est pas en alignement avec la trajectoire de mouvement souhaitée (140, 142, 144) ; et
générer un deuxième signal de commande (O2) permettant de commander le déplacement de la machine de travail (100) en fonction du paramètre opératoire mis à jour, de telle sorte que l'au moins un composant (116) de la machine de travail (100) est en alignement avec la trajectoire de mouvement souhaitée (140, 142, 144) ;
dans lequel la trajectoire de mouvement souhaitée (140, 142, 144) comporte au moins l'une parmi une trajectoire linéaire, une trajectoire courbée, une pluralité de trajectoires linéaires (158, 160) et une combinaison de celles-ci ;
**caractérisé en ce que** l'organe de commande (146) est configuré en outre pour :
déterminer au moins une première trajectoire linéaire (158) parmi la pluralité de trajectoires linéaires (158, 160) et au moins une seconde trajectoire linéaire (160) parmi la pluralité de trajectoires linéaires (158, 160), de telle sorte que la première trajectoire linéaire (158) et la seconde trajectoire linéaire (160) sont placées de manière angulaire l'une par rapport à l'autre, un angle (S1) défini entre la première trajectoire linéaire (158) et la seconde trajectoire linéaire (160) étant au moins l'un parmi inférieur à et égal à environ 180 degrés ;
déterminer une trajectoire de transition (164) en fonction de la détermination de la première trajectoire linéaire (158) et de la seconde trajectoire linéaire (160) permettant de mouvoir la machine de travail (100) de la première trajectoire linéaire (158) à la seconde trajectoire linéaire (160) ; et
générer un troisième signal de commande (O3) permettant de mouvoir la machine de travail (100) le long de la trajectoire de transition (164) pour placer la machine de travail (100) sur la seconde trajectoire linéaire (160) ; et
dans lequel la machine de travail (100) ne met pas en œuvre l'opération d'excavation lorsque la machine de travail (100) est en mouvement sur la trajectoire de transition.

8. Système (136) selon la revendication 7, dans lequel l'organe de commande (146) est configuré pour recevoir une entrée « I1 » en provenance d'un opérateur de machine permettant d'initier le déplacement de la machine de travail (100), de telle sorte que l'au moins un composant (116) de la machine de travail (100) est en alignement avec la trajectoire de mouvement souhaitée (140, 142, 144).

9. Système (136) selon la revendication 7, dans lequel la trajectoire de mouvement souhaitée (140, 142, 144) est au moins l'une parmi préstockée dans une mémoire (148) associée à l'organe de commande (146), fournie en tant qu'entrée de trajectoire « I2 » par un opérateur de machine, et déterminée par l'organe de commande (146).

10. Système (136) selon la revendication 7, dans lequel l'organe de commande (146) est configuré pour recevoir une entrée (13) en provenance d'un opérateur de machine pour au moins l'une parmi une augmentation de la distance de déplacement souhaitée et une diminution de la distance de déplacement souhaitée.

11. Système (136) selon la revendication 7, dans lequel une valeur de la vitesse maximale est commandable par un opérateur de machine.

12. Système (136) selon la revendication 7, dans lequel une valeur de la distance de déplacement souhaitée est préstockée dans une mémoire (148) associée à l'organe de commande (146).
